# FASCICULE DE BREVET EUROPEEN

(11) **EP 2 321 510 B1**
(45) Date de publication et mention de la délivrance du brevet: **03.07.2013**
(21) Numéro de dépôt: 09784308.0
(22) Date de dépôt: 28.07.2009
(51) Int. Cl.: F02C 7/045, F02C 7/047, B64D 33/02

(54) **Structure d'entrée d'air de nacelle de turboréacteur à dégivrage pneumatique**
Lufteinlassstruktur einer Turboluftstrahltriebwerksgondel mit pneumatischem Frostschutzsystem
Air intake structure of a turbojet engine nacelle with pneumatic anti-icing

(30) Priorité: 30.07.2008 FR 0804348; 06.11.2008 FR 0806196; 22.12.2008 FR 0807350
(43) Date de publication de la demande: 18.05.2011
(73) Titulaire: Aircelle, 76700 Gonfreville l'Orcher (FR)
(72) Inventeur: VAUCHEL, Guy, Bernard, F-76600 Le Havre (FR); RUCKERT, Guillaume, F-27210 Fiquefleur-Equainville (FR)
(74) Mandataire: Gaillarde, Frédéric F. Ch.
(86) Numéro de dépôt international: PCT/FR2009/000934
(87) Numéro de publication internationale: WO 2010/012899

(56) Documents cités:
- EP-A- 1 591 643
- FR-A- 2 906 568
- GB-A- 2 112 339
- US-A- 4 235 303
- US-A- 4 240 250
- US-A1- 2005 183 903
- KIRCA ET AL: "Computational modeling of micro-cellular carbon foams" FINITE ELEMENTS IN ANALYSIS AND DESIGN, ELSEVIER, AMSTERDAM, NL, vol. 44, no. 1-2, 17 octobre 2007 (2007-10-17), pages 45-52, XP022350527 ISSN: 0168-874X
- VAIDYA U K ET AL: "Impact and post-impact vibration response of protective metal foam composite sandwich plates" MATERIALS SCIENCE AND ENGINEERING A: STRUCTURAL MATERIALS:PROPERTIES, MICROSTRUCTURE & PROCESSING, LAUSANNE, CH, vol. 428, no. 1-2, 25 juillet 2006 (2006-07-25), pages 59-66, XP025099110 ISSN: 0921-5093 [extrait le 2006-07-25]
- GORANSSON ET AL: "Tailored acoustic and vibrational damping in porous solids - Engineering performance in aerospace applications" AEROSPACE SCIENCE AND TECHNOLOGY, EDITIONS SCIENTIFIQUES ET MEDICALES ELSEVIER, vol. 12, no. 1, 22 octobre 2007 (2007-10-22), pages 26-41, XP022486792 ISSN: 1270-9638

## Description

La présente invention se rapporte à une structure d'entrée d'air de nacelle de turboréacteur à dégivrage pneumatique comprenant un ensemble de pièces reliées entre elles par un dispositif permettant de conserver l'intégrité de la surface de l'une des pièces.

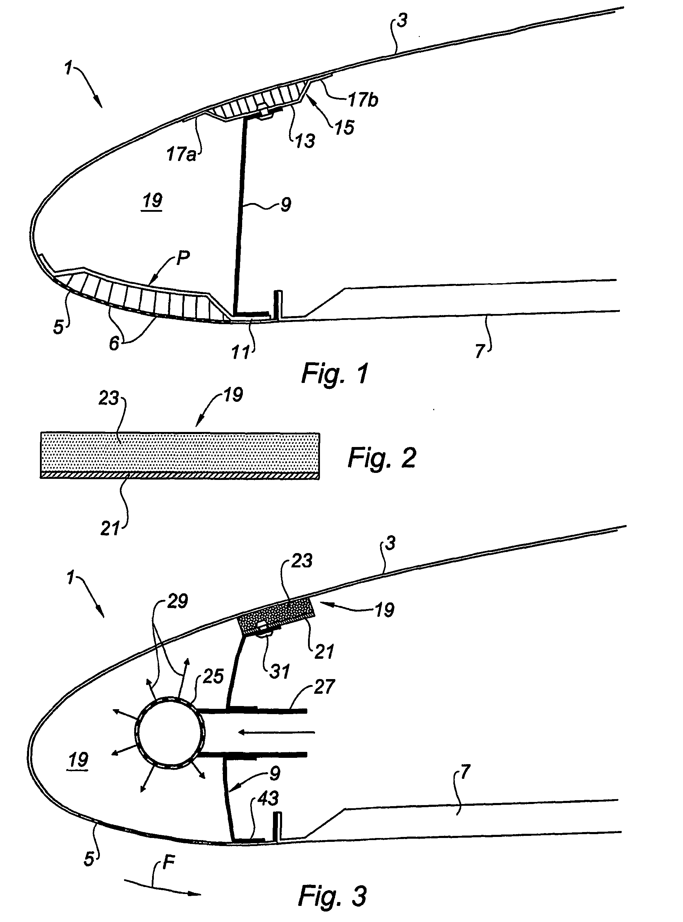

On a représenté sur la figure 1 une structure d'entrée d'air de la technique antérieure, à dégivrage électrique.

Comme cela est connu en soi, une telle structure d'entrée d'air 1 comporte un panneau externe 3, c'est-à-dire situé à la périphérie extérieure de la nacelle, ainsi qu'une lèvre d'entrée d'air 5, formant le bord d'attaque de la nacelle, et situé dans le prolongement d'une partie interne annulaire 7, souvent désignée par le terme « virole », cette virole pouvant avoir des propriétés d'absorption acoustique.

Une cloison interne 9 permet de renforcer la structure d'entrée d'air.

Dans le but de réduire les émissions sonores de la nacelle, on équipe classiquement la lèvre d'entrée d'air 5 d'un panneau d'atténuation acoustique P, présentant une structure en nid d'abeille, la lèvre 5 étant quant à elle munie de perforations 6.

La cloison interne 9 est typiquement rivetée d'une part sur la peau interne de la partie monolithique 11 du panneau P, et d'autre part sur la peau interne 13 d'un élément de liaison 15 présentant lui aussi une structure en nid d'abeille, cette structure en nid d'abeille ainsi que les extrémités 17a, 17b de la peau interne 13 étant fixées par collage à l'intérieur de la peau externe 3.

L'utilisation d'un tel élément intermédiaire de liaison 15 permet d'éviter que les rivets de liaison de la cloison 9 ne dépassent vers l'extérieur du panneau externe 3, et ne perturbent ainsi les performances aérodynamiques de la structure d'entrée d'air.

Des moyens de dégivrage électrique, connus en soi, sont intégrés à la lèvre d'entrée d'air 5.

L'élément de liaison 15, dont la structure en nid d'abeille est généralement métallique, présente un poids qu'il importerait de pouvoir réduire.

De plus, si l'on souhaite utiliser un dégivrage pneumatique en lieu et place du dégivrage électrique, les températures à l'intérieur du compartiment 19 délimité par la cloison 9, sont élevées : typiquement de l'ordre de 400°C.

A ces températures, la colle de fixation de l'élément de liaison 15 ne résiste pas, ce qui pose un problème de tenue de la constitution de la structure.

Une structure d'entrée d'air à dégivrage pneumatique de l'art antérieur est décrite dans le document US 4 240 250.

La présente invention a pour but général de fournir un dispositif de liaison adapté pour relier deux pièces en conservant l'intégrité de la surface de l'une des deux pièces, qui présente un poids inférieur à l'élément de liaison à structure en nid d'abeille 15 et qui est installé dans une zone où les températures sont élevées, dans le compartiment de dégivrage pneumatique d'une structure d'entrée d'air.

On atteint ce but de l'invention avec un ensemble comprenant une première pièce, une deuxième pièce et un dispositif de liaison entre ces deux pièces, ce dispositif étant du type permettant de conserver l'intégrité de la surface de ladite deuxième pièce, cet ensemble étant remarquable en ce qu'il comprend une peau structurante fixée à ladite première pièce et un matériau poreux rapporté sur cette peau structurante et assemblé par contact sur ladite deuxième pièce.

Par « assemblé par contact », on entend une fixation non intrusive sur la deuxième pièce, et notamment une fixation par brasage ou collage.

L'utilisation d'un matériau poreux, c'est-à-dire d'un matériau présentant de nombreuses cellules non remplies de matière, permet un gain de poids substantiel par rapport à un élément de liaison du type à structure en nid d'abeille de la technique antérieure.

Suivant d'autres caractéristiques optionnelles de cet ensemble :
- ledit matériau poreux est choisi dans le groupe comprenant les mousses, les matières expansées, les feutres, les agrégats d'éléments de petite taille ;
- ledit matériau poreux présente des cellules fermées, c'est-à-dire non communicantes ;
- ledit matériau poreux présente des cellules ouvertes, c'est à-dire communicantes ;
- ledit matériau poreux est fixé par brasage ou collage sur ladite peau structurante et/ou sur ladite deuxième pièce ;
- ladite peau structurante s'étend au-delà dudit matériau poreux et ses extrémités sont également fixées par contact sur ladite deuxième pièce ;
- ladite première pièce est fixée par rivetage sur ladite peau structurante ;
- la matière formant ledit matériau poreux est choisie dans le groupe comprenant les matières métalliques, polymères, céramiques ou composites ;
- ledit matériau poreux est sélectionné dans le groupe comprenant les matériaux résistant à des températures allant jusqu'à 200°C, les matériaux résistant à des températures allant jusqu'à 400°C, les matériaux résistant à des températures allant jusqu'à 600°C, et les matériaux résistant à des températures allant jusqu'à 800°C : ce type de matériau poreux peut notamment être utilisé pour réaliser la liaison d'une cloison interne d'un compartiment de dégivrage avec la face interne d'un panneau externe de structure d'entrée d'air à dégivrage pneumatique ;
- la matière formant ledit matériau poreux est choisie dans le groupe comprenant les matières métalliques ou céramiques ;
- ladite matière céramique est de la mousse de carbone ;
- ledit matériau poreux est collé à ladite peau structurante ;
- ladite peau structurante est formée dans des matériaux choisis dans le groupe comprenant les alliages métalliques, les céramiques, les composites à matrice métallique, les composites à matrice céramique ;
- ledit matériau poreux est formé d'une superposition de couches de matériaux poreux de caractéristiques différentes, dans la direction de l'épaisseur du matériau ;
- ledit matériau poreux est formé d'une juxtaposition de pains de matériaux poreux de caractéristiques différentes, dans la direction parallèle au plan moyen du matériau ;
- au moins une structure en nid d'abeille est juxtaposée audit matériau poreux, cette structure et ce matériau étant pris en sandwich par ladite peau structurante et ladite deuxième pièce.

La présente invention se rapporte à une structure d'entrée d'air de nacelle de turboréacteur à dégivrage pneumatique, conformément à la revendication 1, comportant une lèvre d'entrée d'air, un panneau externe et une cloison interne reliant ladite lèvre d'entrée d'air audit panneau externe et définissant un compartiment de dégivrage pneumatique, remarquable en ce que ladite cloison interne est reliée audit panneau externe par un élément de liaison comprenant une peau structurante fixée à ladite cloison interne et un matériau poreux rapporté sur cette peau structurante et fixé par contact à l'intérieur dudit panneau externe, de sorte que ladite cloison interne, ledit élément de liaison et ledit panneau externe forment un ensemble conforme à ce qui précède.

Suivant d'autres caractéristiques optionnelles de cette structure d'entrée d'air :
- ladite lèvre d'entrée d'air est munie d'au moins un premier panneau d'atténuation acoustique en matériau poreux à cellules ouvertes apte à résister à une température pouvant aller jusqu'à 400°C et à conductivité thermique élevée, situé à l'intérieur dudit compartiment de dégivrage et maintenu par une tôle de maintien amont et une tôle de maintien aval, ce panneau acoustique et la tôle de maintien aval définissant, avec ladite cloison interne et ladite lèvre, un ensemble conforme à ce qui précède ;
- ladite structure d'entrée d'air comprend un deuxième panneau d'atténuation acoustique en matériau poreux à cellules ouvertes fixé à l'intérieur de ladite lèvre d'entrée d'air en aval de ladite cloison interne, séparé dudit premier panneau par un joint en matériau poreux à cellules ouvertes apte à résister à une température pouvant aller jusqu'à 400°C et présentant une faible conductivité de la chaleur ;
- ledit deuxième panneau d'atténuation acoustique est choisi dans le groupe comprenant un panneau à matériau poreux et à cellules ouvertes conforme à ce qui précède, apte à résister à une température pouvant aller jusqu'à 120°C, et un panneau à structure en nid d'abeille ;
- ledit premier panneau, ledit joint en matériau poreux et ledit deuxième panneau sont recouverts d'une tôle commune sur laquelle ladite cloison interne est fixée, de préférence par rivetage, cette cloison interne, cette tôle commune et ces panneaux définissant un ensemble conforme à ce qui précède ;
- ladite structure d'entrée d'air est du type dans lequel la lèvre d'entrée d'air forme un ensemble monobloc avec la paroi externe de la structure d'entrée d'air, cet ensemble monobloc étant apte à coulisser par rapport au carter de soufflante du turboréacteur, tel que décrit par exemple dans le document FR 2 906 568.

D'autres caractéristiques et avantages de la présente invention apparaîtront à la lumière de la description qui va suivre, et à l'examen des figures ci-annexées, où :
- la figure 1 illustre une structure d'entrée d'air de l'art antérieur, telle que décrite dans le préambule de la présente description ;
- la figure 2 représente de manière schématique et en coupe, à échelle importante, un mode de réalisation d'un élément de liaison apte à être incorporé à un ensemble conforme à ce qui précède, et
- les figures 3 à 7 représentent différents modes de réalisation de structures d'entrées d'air pour nacelle de turboréacteur incorporant des ensembles selon l'invention.

Sur l'ensemble de ces figures, des références analogues ou identiques désignent des organes ou ensembles d'organes analogues ou identiques.

Comme on peut le voir sur la figure 2, un élément de liaison 19 destiné à être incorporé à un ensemble conforme à ce qui précède comporte une peau structurante 21, formée dans une tôle.

Sur cette peau structurante 21 est rapporté un matériau poreux 23 c'est-à-dire un matériau c'est-à-dire d'un matériau présentant de nombreuses cellules non remplies de matière.

Ce matériau poreux, qui peut se présenter sous forme de mousse, ou sous forme expansée, ou sous forme de feutre, ou sous forme d'un agrégat d'éléments de petite taille tels que des billes, peut être fixé par collage ou brasage sur la peau structurante 21.

Selon que l'on recherche ou non des propriétés d'absorption acoustique, ce matériau poreux peut présenter respectivement des cellules ouvertes, c'est à-dire communicantes, ou bien des cellules fermées, c'est-à-dire non communicantes.

Le matériau poreux 23 peut être formé à partir de matières métalliques, polymères, céramiques ou composites, disponibles sur le marché.

On choisit ce matériau poreux 23 en fonction des conditions d'utilisation de l'élément de liaison 19.

Le tableau ci-dessous donne, à titre d'exemple, différents types de mousses pouvant convenir en tant que matériau poreux pour différentes conditions d'utilisation de l'élément de liaison :

| **Caractéristiques** | **Nature des mousses** | **Exemples de mousses disponibles sur le marché** |
|---|---|---|
| Mousses résistant à des températures relativement élevées (jusqu'à 600°C et au-delà) | Mousses à base d'alliage nickel-chrome - densité de 0,6 à 0,65 g/cm3 | RECEMAT® - commercialisé par la société RECEMAT INTERNATIONAL, ou mousses métalliques de la société FiberNide |
| | Mousse de carbone - peut résister au-delà de 600°C | |
| Mousse résistant à des températures relativement faibles (jusqu'à 200°C) | Mousses à base d'aluminium - densité de 0,2 à 0,4 g/cm3 | Mousses de la société CYMAT |
| | Mousse en polymethacrylimide - densité de 0,05 g/cm3 | ROHACELL® - commercialisé par la société EMKAY PLASTICS |
| Mousses présentant une conductivité thermique relativement élevée | Mousses à base de nickel - conductivité pouvant atteindre 9W / mK pour une porosité minimum de 90% | |
| | Mousses à base d'alliage d'aluminium et de cuivre - conductivité pouvant atteindre 10W / mK pour une porosité minimum de 65% | |
| | Mousse de carbone - conductivité pouvant atteindre 25W / mK pour une porosité minimum de 78% | |
| Mousses présentant une conductivité thermique relativement faible | Mousse en céramique - conductivité allant de 0,01 à 1 W / mK pour une densité allant de 0,02 à 0,4 g/cm3 | |
| | Mousse en polymethacrylimide - conductivité de 0,031 W /mK pour une densité de 0,032 g/cm3 | ROHACELL 31 ® commercialisé par la société EMKAY PLASTICS |

Dans le cas particulier, ne faisant pas partie de l'invention, où l'élément de liaison 19 est destiné à être installé dans des zones de haute température d'une nacelle d'aéronef (notamment dans la zone d'expulsion des gaz d'échappement du turboréacteur), on prévoit que le matériau poreux 23 est formé dans une matière pouvant résister à des températures pouvant aller jusqu'à 800°C : de la mousse de carbone pourra par exemple convenir.

Concernant le matériau utilisé pour la peau structurante 1 de l'élément de liaison 19, le choix sera effectué en fonction des contraintes de poids, de température et de sollicitation mécanique.

Ce matériau pourra être choisi parmi des alliages métalliques, les céramiques, les composites à matrice métallique (CMM) et les composites à matrice céramique (CMC).

On notera que l'on peut envisager que le matériau poreux 23 ne soit pas homogène, mais présente au contraire des zones de caractéristiques d'absorption acoustique différentes.

Ces différentes zones peuvent être des zones d'absence de matériau (cavités), et/ou des zones de matériaux poreux de natures différentes (différentes densités de mousses par exemple).

Une telle hétérogénéité du matériau poreux 23 peut être obtenue par superpositions de couches de matériaux poreux différents dans l'épaisseur de l'élément de liaison, et/ou par juxtaposition de pains de matériaux poreux selon la direction du plan moyen du panneau.

Une telle hétérogénéité du matériau poreux 23 permet de réaliser un élément de liaison sur mesure, c'est-à-dire parfaitement adapté aux conditions (géométrie, température, caractéristiques d'absorption acoustique, contraintes de poids...) dans lesquelles il est destiné à être utilisé.

Les exemples qui suivent illustrent différents modes de réalisation d'une structure d'entrée d'air d'aéronef selon l'invention, incorporant des éléments de liaison du type qui vient d'être décrit.

Tous ces exemples s'appliquent au cas particulier d'une structure d'entrée d'air d'aéronef analogue à celle décrite dans le préambule de la présente description, mais il va de soi que ces exemples ne sont nullement limitatifs, et qu'un ensemble conforme à ce qui précède pourrait être utilisé notamment dans d'autres zones d'une nacelle de turboréacteur d'aéronef.

Dans ce qui suit, on s'attachera à décrire uniquement les caractéristiques distinctives par rapport à celles de la structure d'entrée d'air mentionnée dans le préambule de la présente description.

En se reportant à la figure 3, on a représenté un collecteur d'air chaud 25 relié à au moins un tuyau d'alimentation en air chaud 27, lui-même relié à la zone chaude du turboréacteur (non représenté).

Ce collecteur d'air chaud 25 permet de diffuser de l'air chaud 29 à l'intérieur du compartiment 19, et d'élever ainsi la température de ce compartiment à des températures pouvant aller jusqu'à 400°C : on peut de la sorte réaliser un dégivrage dit « pneumatique » de la lèvre 5 de la structure d'entrée d'air 1.

En situation de fonctionnement, le flux d'air F longe la lèvre 5 et la virole 7 avant de passer à l'intérieur du turboréacteur disposé à l'intérieur de la nacelle.

Dans ce qui suit, les termes « amont » et « aval » doivent s'entendre par rapport au sens de circulation de l'air, tel qu'il est indiqué par la flèche F.

La structure d'entrée d'air 1 peut être du type dans lequel la lèvre d'entrée d'air 5 et le panneau externe 3 forment un ensemble monobloc, apte à coulisser par rapport à la virole 7 lors des opérations de maintenance, comme cela est enseigné par exemple dans le document FR 2 906 568 : on parle couramment dans ce cas de structure « LFC », c'est-à-dire « Laminar Forward Cowl ».

On notera toutefois que l'invention n'est nullement limitée à ce type particulier de structure d'entrée d'air.

Dans l'exemple représenté à la figure 3, la lèvre d'entrée d'air 5 est dépourvue de moyens d'absorption acoustique, et la cloison interne 9 est directement fixée sur cette lèvre.

Cette cloison interne 9 est, à son autre extrémité, reliée au panneau externe 3 par l'intermédiaire d'un élément de liaison 19 conforme à ce qui précède : plus précisément, l'extrémité concernée de la cloison interne 9 est fixée par des moyens de fixation tels que des rivets 31 sur la peau structurante 21 de l'élément de liaison 19, et le matériau poreux 23 est fixé par contact, par exemple par collage ou brasage, à l'intérieur du panneau externe 3.

Dans cette application particulière, le matériau poreux 23 peut consister en une mousse à tenue haute température (jusqu'à 400°C) et à faible conductivité thermique, par exemple une mousse céramique.

On peut toutefois choisir une mousse à bonne conductivité thermique si l'on souhaite réaliser un dégivrage efficace de la partie du panneau externe 3 qui est située au droit de l'élément de liaison 19.

On comprend donc que cet élément de liaison permet de relier la cloison interne 9 au panneau externe 3 sans intrusion dans ce panneau externe, de sorte que l'on n'altère pas les caractéristiques aérodynamiques de ce panneau externe.

L'utilisation d'un matériau poreux 23 permet d'alléger considérablement les moyens de liaison de la cloison interne 9 au panneau externe 3 par rapport aux solutions du type en nid d'abeille de la technique antérieure (voir figure 1).

De plus, en choisissant un matériau poreux 23 adapté aux conditions de températures régnant dans cette zone particulière de la nacelle, on s'affranchit des problèmes de stabilité aux températures élevée des structures de liaison du type en nid d'abeille.

A noter de plus que l'élément de liaison 19, qui peut être réalisé avec des mousses du commerce, est très économique.

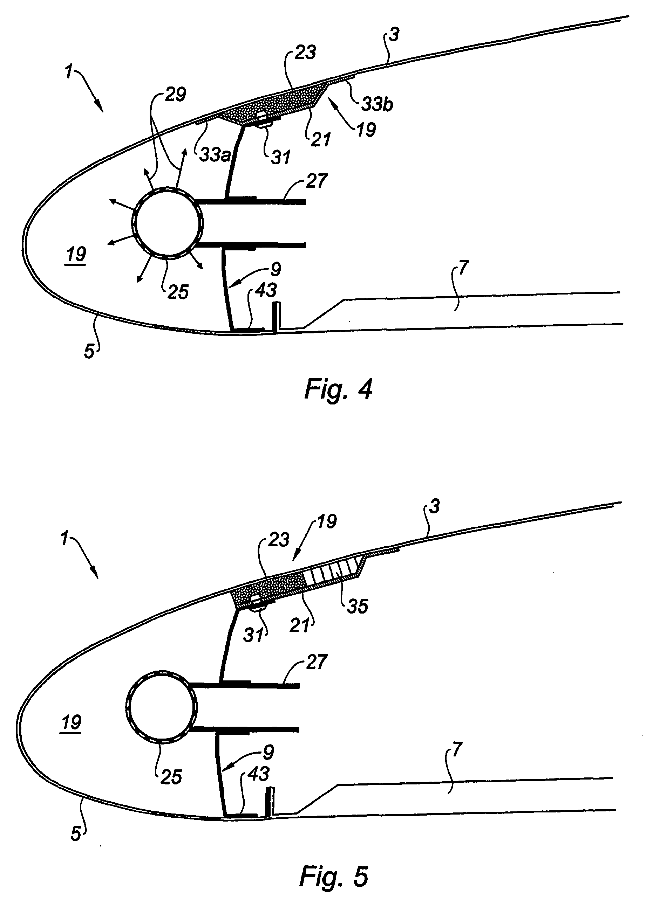

Dans la variante représentée à la figure 4, on voit que l'on peut avantageusement prévoir que la peau structurante de l'élément de liaison 19 s'étende au-delà du matériau poreux 23, et que ses extrémités 33a, 33b soient fixées par collage ou brasage à l'intérieur du panneau externe 3.

Dans la variante représentée à la figure 5, on prévoit qu'une structure en nid d'abeille 35 est disposée dans le prolongement du matériau poreux 23, la peau structurante 21 recouvrant à la fois le matériau poreux 23 et la structure 35 : le matériau poreux 23 se trouve de la sorte en zone chaude, et la structure en nid d'abeille 35, située en aval de la cloison interne 9, se trouve en zone froide.

Dans cette variante, la longueur et les caractéristiques du matériau poreux 23 sont choisies de manière qu'à son extrémité aval, les températures soient compatibles avec la structure en nid d'abeille 35.

Plusieurs matériaux poreux peuvent même être choisis de manière à obtenir d'une part une bonne conduction de la chaleur en direction de la partie du panneau externe 3 située au droit de la cloison interne, et d'autre part un barrage vis-à-vis de la transmission de chaleur en direction de la structure en nid d'abeille 35.

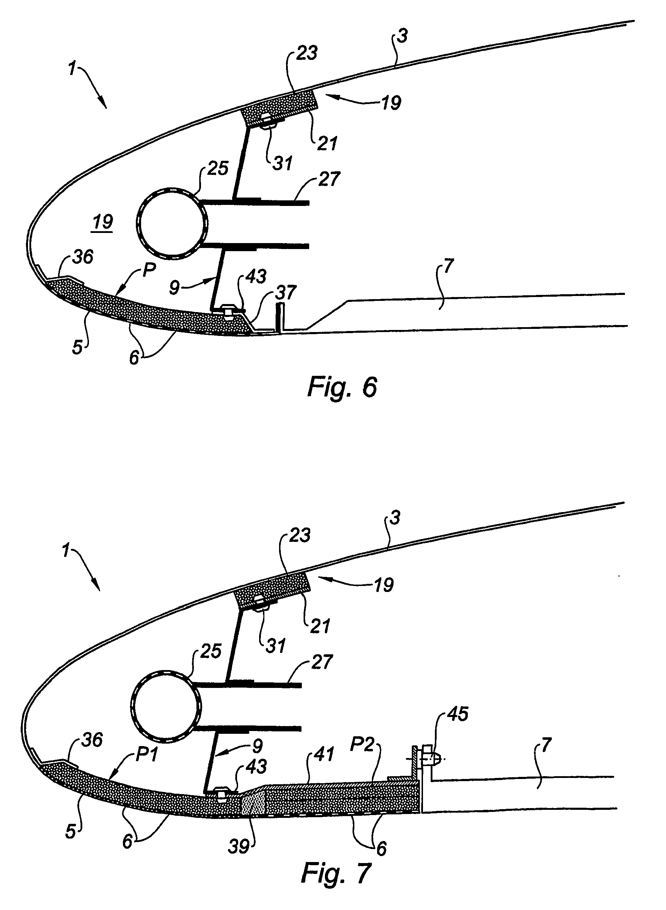

La variante de la figure 6 se distingue de celle de la figure 3 en ceci que la lèvre d'entrée d'air 5 comprend un panneau d'atténuation acoustique P formé lui aussi en matériau poreux (et non en structure en nid d'abeille comme c'est le cas pour la structure d'entrée d'air de la figure 1), et maintenu par une tôle amont 36 et une tôle aval 37.

La cloison interne 9 est typiquement rivetée sur la tôle aval 37.

Le matériau poreux du panneau d'atténuation acoustique P est choisi de manière à pouvoir résister à une température pouvant aller jusqu'à 400°C.

On veillera en outre à ce que ce matériau poreux présente une forte conductivité de la chaleur, de manière à permettre à la chaleur de l'air chaud situé à l'intérieur du compartiment de dégivrage 19 de rayonner jusqu'à la surface de la lèvre d'entrée d'air 5, permettant ainsi un dégivrage efficace.

Dans la variante représentée à la figure 7, on retrouve un panneau P1 analogue au panneau P de la variante de la figure 6, en aval duquel se trouve un panneau P2 conforme à l'invention, et dont le matériau poreux est choisi de manière à résister à une température pouvant aller jusqu'à 120°C.

Entre ces deux panneaux P1 et P2 se trouve un joint de forme sensiblement annulaire 39, formé de préférence dans un matériau poreux apte à résister à des températures pouvant aller jusqu'à 400°C.

Comme cela est visible sur la figure 7, le joint 33 et le panneau d'atténuation acoustique P2 sont situés en aval de la cloison interne 9. Plus précisément, une tôle 41 recouvre la partie aval du panneau P1, le joint 39 et le panneau P2, le retour 43 de la cloison interne 25 étant fixé de préférence par rivetage sur la partie mont de la tôle 41.

Dans le cas particulier où la structure d'entrée d'air 1 est du type « LFC » susmentionné, on peut prévoir des organes de centrage 45 fixés sur la tôle 41, permettant de centrer la structure d'entrée d'air 1 par rapport à la virole 7.

Comme dans le cas de la figure 6, la peau de la lèvre d'entrée d'air 5 forme la peau structurante des panneaux P1 et P2, cette peau structurante étant munie de perforations 6.

Bien entendu, on peut choisir des propriétés acoustiques différentes pour chacun des panneaux P1 et P2, et on peut former l'ensemble des panneaux P, P1, P2 par la juxtaposition et/ou la superposition de pains de mousse, munis éventuellement de cavités).

Bien entendu, on pourra également envisager de remplacer le panneau d'atténuation acoustique P2 en matériau poreux conforme à l'invention par un panneau d'atténuation acoustique classique, du type comprenant une structure en nid d'abeille : la zone dans laquelle se trouve le panneau P2 étant nettement .moins chaude que la zone dans laquelle se trouve le panneau P1, le recours à un panneau d'atténuation acoustique classique est en effet possible.

On notera également que l'on choisira de préférence, pour le joint 39, un matériau poreux présentant une faible conductivité de la chaleur, de manière à isoler correctement le panneau P2 par rapport au panneau P1 : une mousse en céramique pourrait par exemple convenir pour ce joint.

On comprend que dans les variantes des figures 6 et 7, la tôle 37 ou 41 et le panneau P ou P1 constituent des éléments de liaison de la cloison interne 9 à la lèvre 5 conformes aux préceptes de l'invention, c'est-à-dire que l'on fixe la cloison externe 9 sur une peau structurante 37, 41 qui elle-même est collée ou brasée sur un matériau poreux P ou P1, lui-même collé ou brasé à l'intérieur de la lèvre 5, permettant une liaison non intrusive avec cette lèvre, et donc une conservation des caractéristiques aérodynamiques de cette lèvre.

Bien entendu, la présente invention n'est nullement limitée au mode de réalisation décrit et représenté, fourni à titre de simple exemple.

## Revendications

1. Structure d'entrée d'air (1) de nacelle de turboréacteur à dégivrage pneumatique, comportant une lèvre d'entrée d'air (5), un panneau externe (3) et une cloison interne (9) reliant ladite lèvre d'entrée d'air (5) audit panneau externe (3) et définissant un compartiment de dégivrage pneumatique (19), **caractérisée en ce que** ladite cloison interne (9) est reliée audit panneau externe (3) par un élément de liaison (19) permettant de conserver l'intégrité de la surface dudit panneau externe (3) et comprenant une peau structurante (21) fixée à ladite cloison interne (9) et un matériau poreux (23) rapporté sur cette peau structurante (21) et fixé par contact à l'intérieur dudit panneau externe (3).

2. Structure selon la revendication 1, **caractérisée en ce que** :
- ledit matériau poreux (23) est choisi dans le groupe comprenant les mousses, les matières expansées, les feutres, les agrégats d'éléments de petite taille,
- ledit matériau poreux (23) présente des cellules choisies dans le groupe comprenant les cellules fermées, c'est-à-dire non communicantes, et les cellules ouvertes, c'est à-dire communicantes,
- ledit matériau poreux (23) est sélectionné dans le groupe comprenant les matériaux résistant à des températures allant jusqu'à 200°C, les matériaux résistant à des températures allant jusqu'à 400°C, les matériaux résistant à des températures allant jusqu'à 600°C, et les matériaux résistant à des températures allant jusqu'à 800°C,
- la matière formant ledit matériau poreux (23) est choisie dans le groupe comprenant les matières métalliques, polymères, composites, céramiques, lesdites matières céramiques comprenant la mousse de carbone,
- ladite peau structurante (21) est formée dans des matériaux choisis dans le groupe comprenant les alliages métalliques, les céramiques, les composites à matrice métallique, les composites à matrice céramique.

3. Structure selon l'une des revendications 1 ou 2, **caractérisé en ce que** ledit matériau poreux (23) est fixé par brasage ou collage sur ladite peau structurante (21) et/ou sur ladite deuxième pièce (3).

4. Structure selon l'une quelconque des revendications précédentes, **caractérisée en ce que** ladite peau structurante (21) s'étend au-delà dudit matériau poreux (23) et ses extrémités (33a, 33b) sont également fixées par contact sur ladite deuxième pièce (3).

5. Structure selon l'une quelconque des revendications précédentes, **caractérisée en ce que** ladite première pièce (9) est fixée par rivetage sur ladite peau structurante (21).

6. Structure selon l'une quelconque des revendications précédentes, **caractérisée en ce que** ledit matériau poreux (23) est formé d'une superposition de couches de matériaux poreux de caractéristiques différentes, dans la direction de l'épaisseur du matériau.

7. Structure selon l'une quelconque des revendications précédentes, **caractérisée en ce que** ledit matériau poreux (23) est formé d'une juxtaposition de pains de matériaux poreux de caractéristiques différentes, dans la direction parallèle au plan moyen du matériau.

8. Structure selon l'une quelconque des revendications précédentes, **caractérisée en ce qu'**au moins une structure en nid d'abeille (35) est juxtaposée audit matériau poreux (23), cette structure et ce matériau étant pris en sandwich par ladite peau structurante et ladite deuxième pièce.

9. Structure d'entrée s'air (1) selon l'une quelconque des revendications précédentes, **caractérisée en ce que** ladite lèvre d'entrée d'air (5) est munie d'au moins un premier panneau d'atténuation acoustique (P ; P1) en matériau poreux à cellules ouvertes apte à résister à une température pouvant aller jusqu'à 400°C et à conductivité thermique élevée, situé à l'intérieur dudit compartiment de dégivrage (19) et maintenu par une tôle de maintien amont (36) et une tôle de maintien aval (37 ; 41).

10. Structure d'entrée d'air (1) selon la revendication 9, **caractérisée en ce qu'**elle comprend un deuxième panneau d'atténuation (P2) acoustique en matériau poreux à cellules ouvertes fixé à l'intérieur de ladite lèvre d'entrée d'air (5) en aval de ladite cloison interne (9), séparé dudit premier panneau (P1) par un joint en matériau poreux (39) à cellules ouvertes apte à résister à une température pouvant aller jusqu'à 400°C et présentant une faible conductivité de la chaleur.

11. Structure d'entrée d'air (1) selon la revendication 10, **caractérisée en ce que** ledit deuxième panneau d'atténuation acoustique (P2) est choisi dans le groupe comprenant un panneau à matériau poreux et à cellules ouvertes conforme à ce qui précède, apte à résister à une température pouvant aller jusqu'à 120°C, et un panneau à structure en nid d'abeille.

12. Structure d'entrée d'air (1) selon l'une des revendications 10 ou 11, **caractérisée en ce que** ledit premier panneau (P1), ledit joint en matériau poreux (39) et ledit deuxième panneau (P2) sont recouverts d'une tôle commune (41) sur laquelle ladite cloison interne (9) est fixée, de préférence par rivetage.

13. Structure d'entrée d'air (1) selon l'une quelconque des revendications précédentes, **caractérisée en ce qu'**elle est du type dans lequel la lèvre d'entrée d'air (5) forme un ensemble monobloc avec la paroi externe (3) de la structure d'entrée d'air, cet ensemble monobloc étant apte à coulisser par rapport au carter de soufflante du turboréacteur.

## Patentansprüche

1. Lufteingangsstruktur (1) einer Turbotriebwerksgondel mit pneumatischer Enteisung, die eine Lufteingangslippe (5), eine Außenwand (3) und eine innere Trennwand (9) umfasst, die die Lufteingangslippe (5) mit der Außenwand (3) verbindet und ein Abteil für die pneumatische Enteisung (19) definiert, **dadurch gekennzeichnet, dass** die innere Trennwand (9) mit der Außenwand (3) durch ein Verbindungselement (19) verbunden ist, das erlaubt, die Integrität der Fläche der Außenwand (3) beizubehalten und eine strukturierende Haut (21) umfasst, die an der inneren Trennwand (9) befestigt ist und ein poröses Material (23), das auf dieser strukturierenden Haut (21) aufgebracht ist und durch Kontakt im Innern der Außenwand (3) befestigt ist.

2. Struktur nach Anspruch 1, **dadurch gekennzeichnet, dass**:
- das poröse Material (23) aus der Gruppe ausgewählt ist, die die Schäume, die expandierten Materialien, die Filze, die Elementeaggregate kleiner Größe umfasst,
- das poröse Material (23) Zellen aufweist, die aus der Gruppe ausgewählt sind, die die geschlossenen, das heißt nicht kommunizierenden Zellen, und die offenen, das heißt die kommunizierenden Zellen, umfasst,
- das poröse Material (23) aus der Gruppe ausgewählt ist, die die Materialien umfasst, die Temperaturen bis 200 °C vertragen, die Materialien, die Temperaturen bis 400 °C vertragen, die Materialien, die Temperaturen bis 600 °C vertragen und die Materialien, die Temperaturen bis 800 °C vertragen,
- der Stoff, der das poröse Material (23) bildet, aus der Gruppe ausgewählt ist, die die metallischen, Polymer-, Verbund-, keramischen Materialien umfasst, wobei die keramischen Materialien den Karbonschaum umfassen,
- die strukturierende Haut (21) aus Materialien gebildet ist, die aus der Gruppe ausgewählt sind, die die Metalllegierungen, die Keramiken, die Verbundstoffe mit Metallmatrix, die Verbundstoffe mit Keramikmatrix umfassen.

3. Struktur nach einem der Ansprüche 1 oder 2, **dadurch gekennzeichnet, dass** das poröse Material (23) durch Löten oder Kleben auf der strukturierenden Haut (21) und/oder auf dem zweiten Teil (3) befestigt ist.

4. Struktur nach einem der vorangehenden Ansprüche, **dadurch gekennzeichnet, dass** sich die strukturierende Haut (21) über das poröse Material (23) hinaus erstreckt und ihre Enden (33a, 33b) ebenfalls durch Kontakt auf dem zweiten Teil (3) befestigt sind.

5. Struktur nach einem der vorangehenden Ansprüche, **dadurch gekennzeichnet, dass** das erste Teil (9) durch Nieten auf der strukturierenden Haut (21) befestigt ist.

6. Struktur nach einem der vorangehenden Ansprüche, **dadurch gekennzeichnet, dass** das poröse Material (23) von einer Übereinanderlagerung von Schichten poröser Materialien mit verschiedenen Merkmalen in Richtung der Dicke des Materials gebildet ist.

7. Struktur nach einem der vorangehenden Ansprüche, **dadurch gekennzeichnet, dass** das poröse Material (23) von einer Nebeneinaderlagerung von Riegeln poröser Materialien mit verschiedenen Merkmalen in die zur mittleren Ebene des Materials parallele Richtung gebildet ist.

8. Struktur nach einem der vorangehenden Ansprüche, **dadurch gekennzeichnet, dass** mindestens eine Bienenwabenstruktur (35) neben das poröse Material (23) gelegt ist, wobei diese Struktur und dieses Material sandwichartig zwischen der strukturierenden Haut und dem zweiten Teil angeordnet sind.

9. Lufteingangsstruktur (1) nach einem der vorangehenden Ansprüche, **dadurch gekennzeichnet, dass** die Lufteingangslippe (5) mit mindestens einer ersten akustischen Dämpfungsplatte (P; P1) aus porösem Material mit offenen Zellen ausgestattet ist, das imstande ist, eine Temperatur zu vertragen, die bis 400 °C gehen kann und mit hoher thermischer Konduktivität, die sich im Enteisungsabteil (19) befindet und von einem vorderen Halteblech (36) und einem hinteren Halteblech (37; 41) gehalten wird.

10. Lufteingangsstruktur (1) nach Anspruch 9, **dadurch gekennzeichnet, dass** sie eine zweite akustische Dämpfungsplatte (P2) aus porösem Material mit offenen Zellen umfasst, die in der Lufteingangslippe (5) nach der inneren Trennwand (9) befestigt ist, getrennt von der ersten Platte (P1) durch eine Verbindung aus porösem Material (39) mit offenen Zellen, die imstande ist, eine Temperatur zu vertragen, die bis 400 °C gehen kann und eine geringe Wärmekonduktivität aufweist.

11. Lufteingangsstruktur (1) nach Anspruch 10, **dadurch gekennzeichnet, dass** die zweite akustische Dämpfungsplatte (P2) aus der Gruppe ausgewählt ist, die eine Platte mit porösem Material und offenen Zellen, die dem Vorangehenden entspricht, die imstande ist, eine Temperatur zu vertragen, die bis 120 °C gehen kann, und eine Platte mit Bienenwabenstruktur umfasst.

12. Lufteingangsstruktur (1) nach einem der Ansprüche 10 oder 11, **dadurch gekennzeichnet, dass** die erste Platte (P1), die Verbindung aus porösem Material (39) und die zweite Platte (P2) von einem gemeinsamen Blech (41) bedeckt sind, auf dem die innere Trennwand (9) vorzugsweise durch Nieten befestigt ist.

13. Lufteingangsstruktur (1) nach einem der vorangehenden Ansprüche, **dadurch gekennzeichnet, dass** sie der Bauart ist, bei der die Lufteingangslippe (5) mit der Außenwand (3) der Lufteingangstruktur eine Monoblock-Gruppe bildet, wobei diese Monoblock-Gruppe imstande ist, im Verhältnis zu einem Gebläsegehäuse des Turbotriebwerks zu gleiten.

## Claims

1. An air intake structure (1) of a turbojet engine nacelle with pneumatic deicing, including an air intake lip (5), an outer panel (3), and an inner partition (9) connecting said air intake lip (5) to said outer panel (3) and defining a pneumatic deicing compartment (19), **characterized in that** said inner partition (9) is connected to said outer panel (3) by a connecting element (19) making it possible to preserve the integrity of the surface of said outer panel (3) and comprising a structural skin (21) fixed to said inner partition (9) and a porous material (23) attached on that structural skin (21) and fixed by contact to the inside of said outer panel (3).

2. The structure according to claim 1, **characterized in that**:
- said porous material (23) is chosen from among the group comprising foams, expanded materials, felts, aggregates of small elements,
- said porous material (23) has cells chosen from among the group comprising closed cells, i.e., non-communicating cells, and open cells, i.e., communicating cells,
- said porous material (23) is selected from among the group comprising materials withstanding temperatures of up to 200°C, materials withstanding temperatures of up to 400°C, materials withstanding temperatures of up to 600°C, and materials withstanding temperatures of up to 800°C,
- the material forming said porous material (23) is chosen from among the group comprising metals, polymers, composites, ceramics, said ceramic materials comprising carbon foam,
- said structural skin (21) is formed from a material chosen from among the group comprising metal alloys, ceramics, metal matrix composites, ceramic matrix composites.

3. The structure according to one of claims 1 or 2, **characterized in that** said porous material (23) is fixed by brazing or gluing on said structural skin (21) and/or on said second part (3).

4. The structural skin according to any one of the preceding claims, **characterized in that** said structural skin (21) extends beyond said porous material (23) and its ends (33a, 33b) are also fixed by contact on said second part (3).

5. The structure according to any one of the preceding claims, **characterized in that** said first part (9) is fixed by riveting on said structural skin (21).

6. The structure according to any one of the preceding claims, **characterized in that** said porous material (23) is formed by a superposition of layers of porous materials with different characteristics, in the direction of the thickness of the material.

7. The structure according to any one of the preceding claims, **characterized in that** said porous material (23) is formed by a juxtaposition of bars of porous materials with different characteristics, in the direction parallel to the middle plane of the material.

8. The structure according to any one of the preceding claims, **characterized in that** at least one honeycomb structure (35) is juxtaposed with said porous material (23), that structure and that material being sandwiched by said structural skin and said second part.

9. The air intake structure (1) according to any one of the preceding claims, **characterized in that** said air intake lip (5) is provided with at least one first acoustic attenuation panel (P; P1) made from an open cell porous material capable of withstanding a temperature of up to 400°C and with a high thermal conductivity, situated inside said deicing compartment (19) and maintained by an upstream maintaining sheet (36) and a downstream maintaining sheet (37; 41).

10. The air intake structure (1) according to claim 9, **characterized in that** it comprises a second acoustic attenuation panel (P2) made from an open cell porous material fixed to the inside of said air intake lip (5) downstream from said inner partition (9), separated from said first panel (P1) by a seal (39) made from an open cell porous material capable of withstanding a temperature of up to 400°C and having a low heat conductivity.

11. The air intake structure (1) according to claim 10, **characterized in that** said second acoustic attenuation panel (P2) is chosen from among the group comprising a panel made from a porous material with open cells according to the preceding, capable of withstanding a temperature of up to 120°C, and a honeycomb structure panel.

12. The air intake structure (1) according to one of claims 10 or 11, **characterized in that** said first panel (P1), said seal (39) made from a porous material, and said second panel (P2) are covered by a shared sheet (41) on which said inner partition (9) is fixed, preferably by riveting.

13. The air intake structure (1) according to any one of the preceding claims, **characterized in that** it is of the type in which the air intake lip (5) forms a single-piece assembly with the outer wall (3) of the air intake structure, that single-piece assembly being able to slide relative to the fan case of the turbojet engine.
